# EUROPEAN PATENT SPECIFICATION

(11) **EP 1 790 127 B1**
(45) Date of publication and mention of the grant of the patent: **04.01.2012**
(21) Application number: 05795513.0
(22) Date of filing: 09.09.2005
(51) Int. Cl.: H04J 1/16, H04J 3/14, H04L 12/56, H04L 12/24

(54) **METHODS OF AND SYSTEMS FOR REMOTE OUTBOUND CONTROL**
VERFAHREN UND SYSTEME ZUR AUSGANGSFERNSTEUERUNG
PROCEDES ET SYSTEMES POUR COMMANDE DE DEPART A DISTANCE

(30) Priority: 09.09.2004 US 609062 P
(43) Date of publication of application: 30.05.2007
(73) Proprietor: Avaya Inc., Basking Ridge, NJ 07920 (US)
(72) Inventor: LLOYD, Michael A., San Carlos, CA 94070 (US); KARAM, Mansour J., San Francisco, CA 94115 (US); FRAVAL, Pierre, New York, NY 10024 (US); FINN, Sean P., Belmont, CA 94002 (US); MCGUIRE, James G, San Francisco, CA 94147 (US); BALDONADO, Omar C., Palo Alto, CA 94303 (US)
(74) Representative: Williams, David John
(86) International application number: PCT/US2005/032464
(87) International publication number: WO 2006/029400

(56) References cited:
- WO-A1-03/084134
- WO-A2-02/23807
- WO-A2-02/33893
- US-A1- 2005 044 270
- US-A1- 2005 083 912

## Description

### FIELD OF THE INVENTION

This invention is related to network routing systems. More specifically, this invention is related to systems for and methods of determining combinations of resources for routing data over wide area networks such as the Internet.

### BACKGROUND OF THE INVENTION

Most Internet routing systems are configured to ensure that routes are optimized for performance, such as speed, cost, load, and the performance of the applications that use them. These routing devices measure the performance along particular routes and then select the route with the best performance.

In prior art systems, the performance of a route is determined by transmitting data between a remote host and a central location. In some of these prior art systems, the central location generates data packets, which are transmitted to the remote host and responded to with a reply packet. The round trip time of this communication is halved to get an approximation of the one-way travel time from the remote host to the central location. These approximations often do not reflect the true performance of the route from the remote host to the central location. In other prior art systems, the remote host determines when and how to generate these data packets. The generation and control of these data packets are thus distributed across multiple remote hosts, which may not communicate with one another or, if they do, do so slowly. Accordingly, these systems are often difficult to configure and thus are inefficient in determining optimal routes based on performance. In addition, the duplication of systems to monitor and direct communication to each of many remote sites is expensive in terms of capital and, potentially, performance.

WO 03/084134 discloses a system for end-to-end quality of service measurements in a distributed network environment. WO 02/33893 discloses an apparatus for communicating data within measurement traffic. WO 02/23807 discloses a centralized system for routing signals over an Internet protocol network.

### SUMMARY OF THE INVENTION

In accordance with the invention there is provided a method of transmitting data from a remote site to a destination site according to claim 1. Further in accordance with the present invention there is provided a system for routing data according to claim 6.

In accordance with embodiments of the present invention, a logical path is selected to transmit data from a remote site to a destination site. During a measurement process to determine this logical path, data is transmitted from the remote site to a regional site where measurements are controlled. At this regional site, a list of combinations of resources for transmitting data from the remote site to the destination site is generated. At the regional site, statistics are determined for transmitting data from the remote site to the regional site using each combination of resources from the list. Using these statistics, a combination of resources is selected for transmitting data from the source site to the destination site. By controlling performance measurements and the selection of network resources from a regional location, performance data is able to be determined quickly and to be coordinated. Moreover, network information is able to be updated quickly, since it need not be propagated to remote sites individually. Other benefits will be apparent to those skilled in the art.

The logical path is selected to best fit the application at hand. For example, if the remote site contains an Internet Protocol (IP) enabled telephone, the logical path is selected to transmit the data so that the corresponding data packets have the smallest jitter, ensuring that the data packets are received in order, a requirement for voice data. If the remote is site contains a personal computer used to transmit confidential data, the logical path is selected to include a virtual private network (VPN) to ensure that the data is encrypted and thus cannot be read while in transit.

As used herein, "site" refers to a geographic location that contains one or more hosts. A non-exhaustive list of geographic locations includes a company branch office or research campus, one or more dormitories, and neighboring buildings, to name a few locations. The hosts at a site are generally able to be reached through or to transmit data from one or more common routers, though this is not a requirement of a site. A non-exhaustive list of hosts at a site include personal computers, personal digital assistants, Internet-enabled telephones, pagers, media gateways, Linux servers; application servers, video conferencing endpoints, and branch gateways, to name a few hosts. In some of the discussion that follows, a reference to a site will also refer to the hosts that reside at the site.

It will also be appreciated that one or more regional sites are able to be implemented in accordance with the present invention, each used to determine optimal routes for a subset of remote sites.

In accordance with embodiments of the present invention, statistics, are generated for data transmission from the remote site to the regional site so that the remote site is able to be configured to optimally, transmit data from the remote site to a destination site. In some embodiments, the destination site is the regional site, though this need be the case. In this way, embodiments of the present invention are able to measure performances for traffic close to a site that is being affected. For example, if a regional site is a proxy for a destination site (e.g., contains a proxy server), statistics related to the traffic flows into the regional site are a good indication of statistics for traffic flows into the destination site.

Traffic flowing into and out of a remote site includes traffic exchanged between hosts within the remote site (remote hosts) and hosts within the regional site and the destination site. Traffic flowing into and out of a regional site includes traffic for the regional site as well as traffic for other sites downstream from the regional site. The traffic being optimized in the present invention is typically the traffic flowing out of the remote site and destined for sites downstream from the regional site, though this is not necessarily the case.

Many different combinations of resources that define a logical path in accordance with the present invention are able to be used. Resources include large bandwidth links, such as optical fiber links and T4 links; generic routers; specially configured routers, such as multiprotocol label switching (MPLS) routers and routers configured to route data based on a type-of-service (ToS) tag or a differentiated services tag; and tunnels, such as virtual private networks (VPNs), Generic Routing Encapsulation (GRE) tunnels, Internet Protocol to Internet Protocol (IP-IP) tunnels, and tunnels using the Layer 2 Protocol (L2TP), to name a few resources. A combination of resources can be a single resource (e.g., a single optical fiber link) or any combination of them (e.g., a single optical fiber link combined with a VPN).

A selection criterion is chosen to determine how data is to be transmitted from the remote site to the destination site. As one example, the remote site transmits time-critical data to the destination site, such as voice data, and is to be configured to transmit data to the destination site so that the transmission time is minimal. Thus, the selection criterion is that data be transmitted using the shortest delay. To determine a combination of resources that best meets the selection criterion, measurement data packets are transmitted from the remote site to the regional site using the various combinations of resources available, to determine which combination provides the shortest transmission delay. When the regional site receives a specific measurement packet, it calculates a metric that indicates the time it took the measurement packet to travel from the remote site to the regional site. By comparing the calculated metrics for measurement packets corresponding to each combination of resources, the combination of resources that results in the shortest transmission time is selected, and the remote site is configured to transmit data to the destination site using that selected combination of ressources.

In accordance with embodiments of the present invention, selection criteria can be tailored to fit the application at hand. For example, selection criteria include, but are not limited to, ensuring security; minimizing transmission costs, maximizing speed, and any combination of these, such as a weighted combination of maximizing speed and minimizing transmission costs.

Remote sites are able to contain any type of remote hosts capable of transmitting data to a destination site and also to a regional site and include, but are not limited to, a personal computer, a personal digital assistant (PDA), a pager, an Internet-enabled telephone, and an Internet-enabled appliance, such as defined below. These remote hosts are able to have many different types of applications executing on them, which can all benefit from the present invention. Indeed, a single remote host can use several different combinations of resources, each used to transmit data from a different application executing on the remote host to the central host. Preferably, in operation a regional site accesses a list of resources available to the remote site for transmitting data to the regional site and also to the destination site. The regional site generates combinations of these resources and transmits information corresponding to these combinations to the remote site in one or more combination packets. The remote site receives the one or more combination packets and transmits data packets, called measurement packets, to the regional site using each combination of resources. The regional site receives each measurement packet, recognizes the combination of resources used to transmit it, and calculates a metric used to select a combination of resources. Once the regional site has received all of the measurement packets and calculated the corresponding metrics, it compares the metrics using a selection criterion and selects a combination of resources. The regional site then transmits information indicating the selected combination of resources to the remote site in a decision packet. The remote site is then configured to transmit data to the destination site, which in some embodiments is the regional site, using the selected combination of resources.

Metrics are computed using any one or more statistics such as delay, jitter, loss, mean time between failures, reliability, bandwidth estimations, and availability scores. Other statistics based on these statistics are also able to be used in accordance with the present invention, and include averages, standard deviations, and variances. It will be appreciated that many statistics are able to be used to determine a preferred combination of resources selected to fit the application at hand.

In addition to information identifying a combination of resources, combination packets are also able to contain codes for instructing the remote site to take a particular action. For example, one code instructs the remote site to change the size of the measurement packets, thereby testing the available bandwidth from the remote site to the regional site; another code instructs the remote site to change the version of the protocol for transmitting data packets to the regional site (e.g., from Internet Protocol version 4 (IPv4) to version 6 (IPv6)); and another code instructs the remote site to vary the time between sending multiple measurement packets to the regional site. Indeed, different codes can be used to instruct the remote site to take any number of actions.

Preferably, the remote site and the regional site are coupled by the Internet. In one embodiment, the remote site and the regional site are coupled to one another by a plurality of Internet Service Providers.

Regional sites use various means to learn the identities of the remote sites (e.g., an access point at the remote site, such as a hub router, or individual hosts at the remote sites) to be configured in accordance with the present invention. As one example, a static list of the remote sites is stored on or made accessible to a regional site. As another example, an identifier (e.g., an IP address) for a remote site is registered at a registration server. The regional site queries this registration server to learn the IP addresses of the remote site. In yet another example, the regional site monitors traffic from the remote sites to the registration server to learn the identifiers.

The present invention is also able to configure remote hosts at a remote site, located behind network address translation routers (NATs). This is accomplished by using an identifier for the remote host that corresponds to the combination of an IP address and a dynamically allocated user datagram protocol (UDP) port.

Remote sites are able to be configured at pre-determined times, to ensure that the selected combination of resources is the most up-to-date, accounting for changes in the network or in available system resources.

### BRIEF DESCRIPTION OF THE DRAWINGS

Figure 1 shows a regional site coupled over the Internet to a remote site containing an Internet enabled telephone, configured to route data to the regional site in accordance with one embodiment of the present invention.
Figure 2 shows a table containing a list of remote hosts at one or more remote sites and configured to transmit data to a destination site in accordance with the present invention.
Figure 3 shows a network used to explain how to configure a remote site in accordance with the present invention.
Figures 4A and 4B show, respectively, the transmission of a first combination packet from the regional site to the remote site of Figure 3 and the transmission of a corresponding reply measurement packet from the remote site to the regional site in accordance with the present invention.
Figures 5A and 5B show, respectively, the transmission of a second combination packet from the regional site to the remote site of Figure 3 and the transmission of a corresponding measurement packet from the remote site to the regional site in accordance with the present invention.
Figure 6 shows the transmission of a decision packet from the regional site to the remote site of Figure 3.
Figure 7 shows a sequence of steps for configuring a remote site in accordance with the present invention.
Figure 8 shows a sequence of steps for generating and transmitting combination packets from a regional site to a remote site in accordance with the present invention.
Figure 9 shows a sequence of steps for processing the measurement packets of Figure 8 on the remote site in accordance with the present invention.
Figure 10 shows a sequence of steps for processing a decision packet of Figure 8 on the remote site in accordance with the present invention.
Figure 11A is a Resources Combination Table on a regional site, used to store and track combinations of resource parameters for calculating metrics in accordance with the present invention.
Figure 11B is a Statistics Table on a regional site, with entries corresponding to entries in the Resources Combination Table of Figure 11A, and used to track metrics in accordance with the present invention.
Figure 12 is a Routing Policy Table at a remote site, generated from a decision packet sent from a regional site and used to route data packets from the remote site to the regional site in accordance with the present invention.
Figure 13 shows a sequence of steps for routing data from a remote site using a Routing Policy Table in accordance with the present invention.
Figure 14 shows a data packet formatted using an entry in a Routing Policy Table in accordance with one embodiment of the present invention.
Figure 15 shows a data packet formatted using an entry in a Routing Policy Table in accordance with another embodiment of the present invention.
Figure 16 shows a first data structure for a decision packet in accordance with one embodiment of the present invention.
Figure 17 shows a second data structure for a decision packet in accordance with another embodiment of the present invention
Figure 18 shows a remote site, an intermediate site, and a destination site for which a preferred combination of resources is to be determined for communicating data from the remote site to the destination site.
Figure 19 shows the components of a regional site in accordance with the present invention.
Figure 20 shows the components of a remote site in accordance with the present invention.
Figure 21 shows a registration server coupled to a regional site and multiple remote hosts at corresponding remote sites in accordance with the present invention.

### DETAILED DESCRIPTION OF THE PREFERRED EMBODIMENT

In accordance with the present invention, a preferred combination of resources (also referred to as a logical path) for transmitting data packets from a remote site to a destination site is selected, based on the application at hand. A regional site, which can be different from or the same as the destination site, is used to determine an optimal path from the remote site to the regional site and to then configure the remote site to transmit data packets to the destination site. A company with a destination site (e.g. a branch office) is thus able to tailor communications between remote users and the branch office. As a first example, a system in accordance with the present invention automatically configures a personal computer used by a first traveling salesman (a remote host at a remote site) to transmit sensitive data to the branch office using a secure channel. As a second example, the system automatically configures a personal computer used by a second traveling salesman (another remote host at another remote site) to transmit non-sensitive large-volume data to the branch office using large-bandwidth unsecured channels. The system determines a preferred combination of resources (here, any combination of the secure channel and the high bandwidth channel) for transmitting data from each of the remote hosts to the branch office. As explained in more detail below, measurements are taken from the remote sites, to a regional site, where the measurements are able to be controlled, processed, and coordinated, and from which the remote sites (e.g., the remote hosts at the remote sites) are able to be configured.

The selection criterion for determining the preferred combination of resources depends on the application at hand. In the first example above, the selection criterion causes the system to select the combination of resources which provides the most secure communications path. As described in more detail below, a metric corresponding to the security level for communications is computed for each tested combination of resources available from the remote site to the regional site and also to the destination site. This is performed by transmitting data packets from the remote site to the regional site using each tested combination of resources, calculating a set of statistics for each transmission, and generating a metric for each set of statistics. The combination of resources corresponding to the most secure channel is selected for transmitting data from the remote site of the first salesman to the regional site. This combination of resources is selected at the regional site and is then used to transmit data from the first salesman to the branch office.

In the second example, the selection criterion causes the system to select the combination of resources which provides the highest bandwidth. In this second example, a metric corresponding to the bandwidth is computed for each combination of resources. The combination of resources corresponding to the largest bandwidth communications path from the remote host to the regional site is selected, based on its metric. This combination of resources is selected at the regional site and is then used to transmit data from the second salesman to the branch office.

Preferably, the metric is a transmission parameter (e.g., delay or bandwidth) or a function of a transmission parameter (e.g., a weighted average of the delay and bandwidth). When two combinations of resources have the same metric for an application, a second metric (e.g., a cost) is used as a tie breaker.

As explained in more detail below, the regional site generates a list corresponding to multiple combinations of resources, including but not limited to, (1) media having a specified bandwidth, (2) an intermediate router (e.g., a multi-protocol label switch (MPLS) router or type-of-service (ToS) enabled router) that routes data packets based on an MPLS tag or a ToS label, (3) a generic router (4) a virtual private network (VPN) tunnel, (5) one or more source routing enabled routers, which together route a data packet so that it traverses a specified list of routers, either in a specific sequence (strict source routing) or not (loose source routing), or (6) any combination of these resources. The central host regional site transmits information corresponding to one of these combinations in a combination packet. The remote site receives the combination packet and, in reply, transmits a measurement packet to the regional site using one of the combination of resources. The regional site receives the measurement packet, calculates statistics based on it (e.g., delay, jitter, mean time between failures), and generates metrics based on the statistics. This is done for each combination of resources. Using a selection criterion, the regional site then determines a preferred metric, and thus the corresponding preferred combination of resources, for routing data from the remote site to the destination site. The regional site transmits a decision packet containing information indicating the preferred combination of resources to the remote site. When the remote site receives the decision packet, it is configured to transmit data to the destination site using these preferred combination of resources. The remote site is also able to notify the regional site in an acknowledgment packet that it received the decision packet.

In addition to information corresponding to a particular combination of resources, the combination packet can also contain a code corresponding to a measurement action. A measurement action specifies other steps that the remote site must take, including, but not limited to, changing the size of measurement packets transmitted to the regional site and also the destination site, transmitting multiple measurement packets of varying size, transmitting multiple measurement packets at pre-determined time intervals, formatting measurement packets using a specified version number of the Internet Protocol (IP), and allocating memory on a host at the remote site. By changing the size and number of measurement packets, for example, a bandwidth or throughput is able to be determined for a transmission from a remote host to a destination site. Other measurement actions are taught in U.S. Patent Publication No. 2003/0161321, titled "Method and Apparatus for Characterizing the Quality of a Network Path," published August 28, 2003; and PCT International Application No. PCT/US01/32309, titled "Method and Apparatus for Communicating Data Within Measurement Traffic," published April 25, 2002.

A measurement packet can also include optional tracking information such as an identifier corresponding to the regional site, a version number of the measurement packet; information identifying the combination of resources, so that the regional site is able to recognize and correctly process the measurement packet; an identifier for the remote site, in case the regional site is used in accordance with the present invention to receive data packets from multiple remote sites; a time stamp generated on the remote site, used to calculate delay and other statistics; and a sequence number to identify multiple measurement packets transmitted using the selected combination of resources. To simplify the discussion that follows, references to one data packet also refer to multiple data packets.

The decision packet can be formatted to contain compressed information, thereby saving space. In these embodiments, rather than listing an entire combination of resources, the decision packet contains a control action code denoting the combination of resources. Thus, when the remote site receives the decision packet, it reads the control action code, compares it to stored control action codes, and is then configured to transmit data to the destination site using a combination of resources that corresponds to the control action code. Preferably, the control action code corresponds to an entry in a table containing the preferred combination of resources. In these embodiments, the decision packet contains information corresponding to an identifier for the remote site of for remote hosts and the remote site, a path identifier indicating the path that data packets from the remote site to the destination site must take, a set of users for which the preferred combination of resources applies, a group identifier, and the control action code. In these embodiments, the control action codes correspond to enforcing next-hop addressing, ToS routing, loose source routing, and strict source routing, to name a few actions.

The present invention is also useful in determining traffic flows in areas near either a regional site or a remote site and then configuring other sites based on those traffic flows. As one example, traffic into or out of a first set of sites is measured, a second set of sites is configured based on statistics generated from those measurements, and a third set of sites has traffic flows that are affected by combinations of resources selected at the regional site. Thus, for example, a first set of sites contains a file server (a server site) and the third set of sites contains a proxy server (a proxy site), which is affected by the traffic to and from the server site. The proxy site is generally close to the server site, but this is not necessarily so. Thus, traffic to and from the server site is able to be measured and metrics computed. A combination of resources is then able to be selected to configure the server site, the proxy site, or both. Thus, in accordance with the present invention, sites other than the one for which measurements are made are able to be configured.

The above description is of a general embodiment. In one embodiment, the first and second sets of sites are the same; that is the sites whose traffic flows are measured are the same sites that are configured. In another embodiment, the first and third sets of sites are the same; that is the sites whose traffic flows are measured are the same sites affected by the traffic flows. And in yet a third embodiment, the second and third sets of sites are the same; that is the sites that are configured are the same sites whose traffic flows are affected.

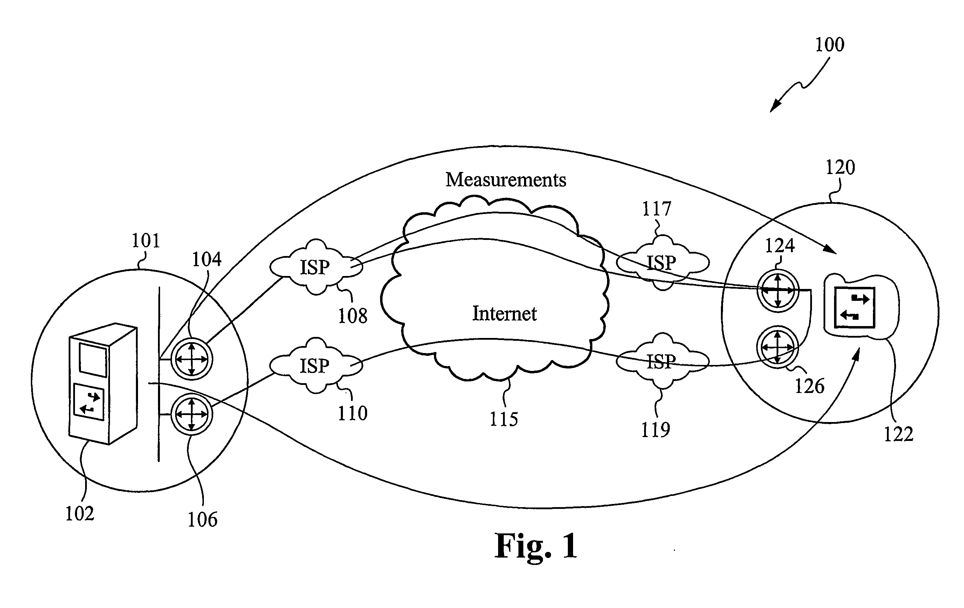

Referring to Figure 1, an environment 100 comprises a regional site 101 that is also a destination site (e.g., a branch office) coupled to a remote site 120 over the Internet 115. The regional site 101 includes a regional host 102 and the remote site 120 includes a remote host 122. In this embodiment, the exemplary remote host 122 is an Internet-enabled telephone, configured to communicate with the regional host 102 over the Internet 115. In other embodiments, the remote host 122 is a different host such as, but not limited to, a personal computer, a personal digital assistant, an IP-enabled appliance, or a pager. As used herein, an Internet appliance is any product that accesses services over the Internet and is dedicated to one or more tasks, and includes dedicated products such as intelligent kitchen appliances, intelligent phones, and home networked computers, to name a few.

The regional host 102 is coupled to first and second routers 104 and 106. The first router 104 is coupled to an Internet Service Provider (ISP) 108 and the second router 106 is coupled to the ISP 110. The ISP 108 is coupled by the Internet 115 to the ISP 117. The ISP 117 is coupled to the router 124 and the ISP 119 is coupled to the router 126. The ISP 110 is coupled to the ISP 119. The routers 124 and 126 are both contained at the remote site 120 and are coupled to the Internet-enabled telephone 122.

The ISPs 108, 110, 117, 119, and the Internet 115 all contain different resources for transmitting data from the remote host 122 to the regional host 102. The resources are able to be used in many different combinations to transmit data from the remote host 122 to the regional host 102. For example, the remote host 102 is able to communicate with the regional host 102 using a first combination of resources that includes the router 124, the ISP 117, the Internet 115, the ISP 108, and the router 104. The Internet 115 also contains resources such as MPLS enabled routers, VPNs, and high-bandwidth links, to name a few, which are not shown in detail in Figure 1. The remote host 122 is also able to communicate with the regional host 102 using a second combination of resources that includes the router 126, the ISP 119, the Internet 115, the ISP 110, and the router 106.

In different embodiments, the remote host 122 performs different applications, such as transferring to the regional host 102 time-sensitive data, large-volume data, confidential data and non-critical data that should be transmitted cheaply. In the example shown in Figure 1, the remote host 122 is an IP-enabled telephone and the regional site 101 containing the regional host 102 comprises a voice gateway. In this example, the IP-enabled telephone 122 transmits time-sensitive data. Data received by the voice gateway late or out of sequence is generally dropped.

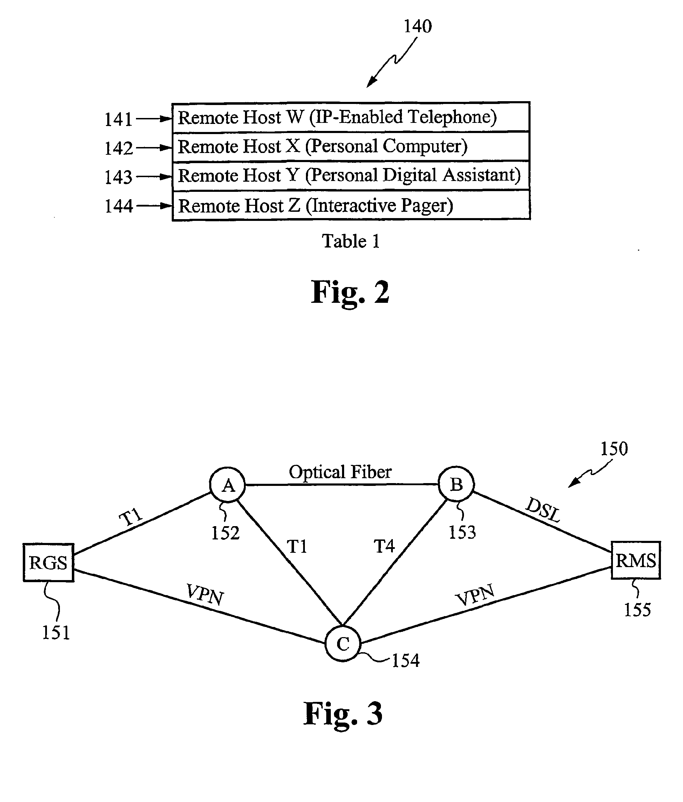

Many types of remote hosts are able to be used in accordance with the present invention, each performing one or more applications that benefit from communicating with a destination site containing destination hosts using a preferred combination of resources. Figure 2 shows a Table 140, listing several Internet Protocol (IP) enabled remote hosts used in accordance with the present invention: Remote Host W, an IP-enabled telephone (row 141); Remote Host X, a personal computer (row 142); Remote Host Y, a personal digital assistant (PDA) (row 143); and Remote Host Z, an interactive pager (row 144). In some embodiments, Table 140 is stored on a regional host at a regional site to keep track of the remote hosts that are configured to communicate with the destination host (which here is also the regional host) in accordance with the present invention. It will be appreciated that the names of the remote hosts (e.g., Remote Host W) will be replaced by their IP address, by a combination of an IP address and port number, such as when used with the Network Address Translation (NAT) devices described below, or by some other identifier.

Figure 3 shows a networked environment 150 used to describe how a preferred combination of resources is determined and a system configured to route data using that combination of resources in accordance with the present invention. The networked environment 150 comprises a regional site (RGS) 151 and a remote site (RMS) 155. To simplify the following explanation, the regional site 151 is also the destination site for data packets transmitted from the remote site 155. The regional site 151 is coupled to the router A 152 and the router C 154. The router A 152 is coupled to the router C 154 and the router B 153. The router B 153 is coupled to the router C 154 and the remote site 155, which is also coupled to the router C 154. In this example, the capabilities and capacities of the links are shown by the labels on each link. For example, the link RGS-A is a T1 line, the link A-B is an optical fiber link, the link B-RMS is a Digital Subscriber Line (DSL), the links RMS-C and C-RGS form a virtual private network (VPN) for transmitting encrypted data, the link B-C is a T4 line, and the link C-A is a T1 line. It will be appreciated that resources such as optical fiber links, T1 and T4 links, encrypted tunnels, and DSL lines are merely illustrative and not intended to be limiting. Other embodiments use other resources such as MPLS routers, asynchronous transfer mode (ATM) routers, private networks, private lines, Integrated Services Digital Networks, wireless components (such as those for communicating using Bluetooth or the IEEE 802.11g standard), Internet Protocol to Internet Protocol (IP-IP) tunnels, Layer 2 Tunneling Protocol tunnels, and Generic Routing Encapsulation (GRE) tunnels, to name a few structures.

According to one selection criterion in accordance with the present invention, if the remote site 155 requires secure transmission to the regional site 151, then the path RMS-C-RGS is preferred since it ensures secure, encrypted transmissions. If the remote site155 contains a pager that requires the cheapest transmission, then the path RMS-B-C-A-RGS is preferred, since it traverses non-encrypted paths (which are cheaper in this example) and T1 lines rather than the more expensive optical fiber link. As explained in more detail below, measurement packets are transmitted along each combination of resources (e.g., RMS-B-A-RGS , RMS-B-C-A-RGS, etc.), statistics are generated, metrics are computed, and a preferred combination of resources is selected to fit the application at hand.

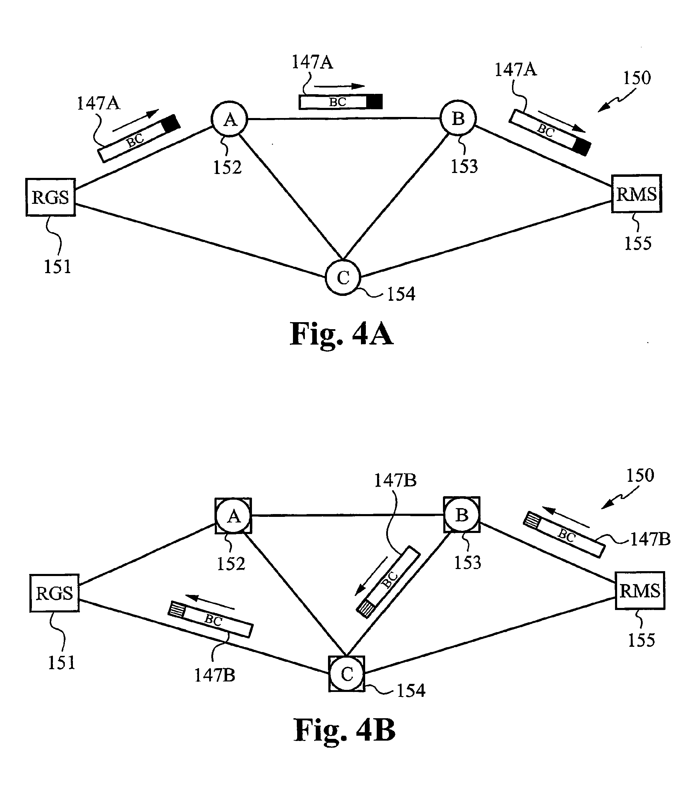

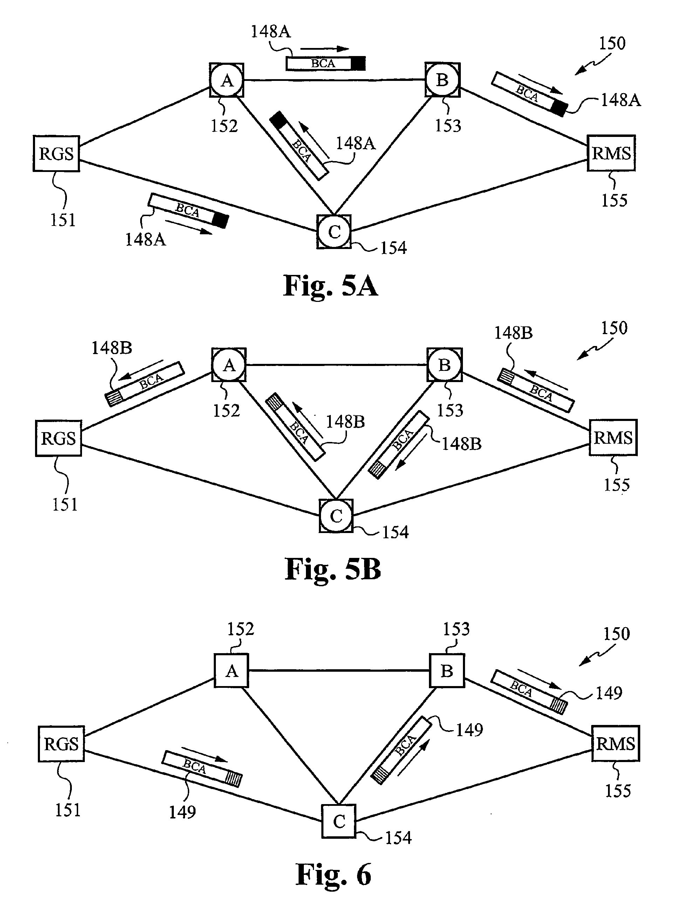

Figures 4A-B and 5A-B show a simplified example of the operation of one embodiment of the present invention, using the same networked environment 150 of Figure 3. First, the regional site 151 (e.g., a host at the regional site, also called a regional host) generates a list of combinations of resources, here the paths RMS-B-C-RGS and RMS-B-C-A-RGS. As shown in Figure 4A, the regional site 151 sends a first combination packet 147A, specifying a first combination of resources (RMS-B-C-RGS, simplified as BC). The first combination packet 147A travels along the path RGS (regional site 151) to A (router 152) to B (router 153) to RMS (remote host 155). The first combination packet 147A contains the path (combination of resources) BC, specifying that a measurement packet from the remote site 155 to the regional site 151 must take the path BC so that statistics for this path are generated and, from these statistics, a metric is calculated. It will be appreciated that the first combination packet 147A is able to take any path from the regional site 151 to the remote site 155, which is generally different from the path BC.

As shown in Figure 4B, the remote site 155 replies with a corresponding measurement packet 147B that takes the path RMS-B-C-RGS, which includes the specified path BC, as required. The regional site 151 calculates statistics and, from them, a corresponding metric associated with the transmission of the measurement packet 147B. As explained above, the metric is able to be calculated from any function of the statistics, depending on what is to be optimized: cost, security, and bandwidth, to name a few.

As shown in Figure 5A, the regional site 151 next chooses the second combination of resources (the path RMS-B-C-A-RGS, simplified as BCA) and transmits a second combination packet 148A to the remote site 155. This second combination of resources specifies the data path BCA. This second combination packet 148A travels along the route RGS-C-A-B-RMS. As shown in Figure 5B, the remote site 155 responds with the second measurement packet 148B that travels along the route RMS-B-C-A-RGS, which includes the specified path BCA. The regional site 151 calculates statistics and a corresponding metric associated with this second measurement data packet. In this example, the metric associated with the second measurement data packet is preferred (e.g., has a higher or lower value, depending on how the metric is computed and used). Accordingly, as shown in Figure 6, the regional site 151 transmits to the remote site 155 a decision packet 149 specifying that data packets transmitted from the remote site 155 to the regional site 151 must travel along the path (i.e., use the combination of resources) BCA. Thus, data transmissions from the remote site 155 to the destination site, which in this example is also the regional site 151 will take the path shown in Figure 5B.

It will be appreciated that the embodiments shown in Figures 4A-B and 5A-B are able to be implemented in different ways in accordance with the present invention. For example, in another embodiment, the regional site 151 transmits a list of combinations of resources in a single combination packet, as part of a single transmission, rather than in two separate combination packets such as shown in Figures 4A and 5A. Alternatively, the combination packet, the decision packet, or both also include an integer that uniquely identifies a combination of resources recognizable by the remote site 155, thereby reducing the amount of information transmitted from the regional site 151 to the remote site 155.

It will also be appreciated that embodiments of the present invention are able to be used with networked environments much more complex than that shown in Figure 3. For example, generally one or more of the routers 152-154 is replaced by an Internet Service Provider (ISP) or other portion of the Internet and comprises multiprotocol label switching (MPLS) edge routers, MPLS interior routers, and the like.

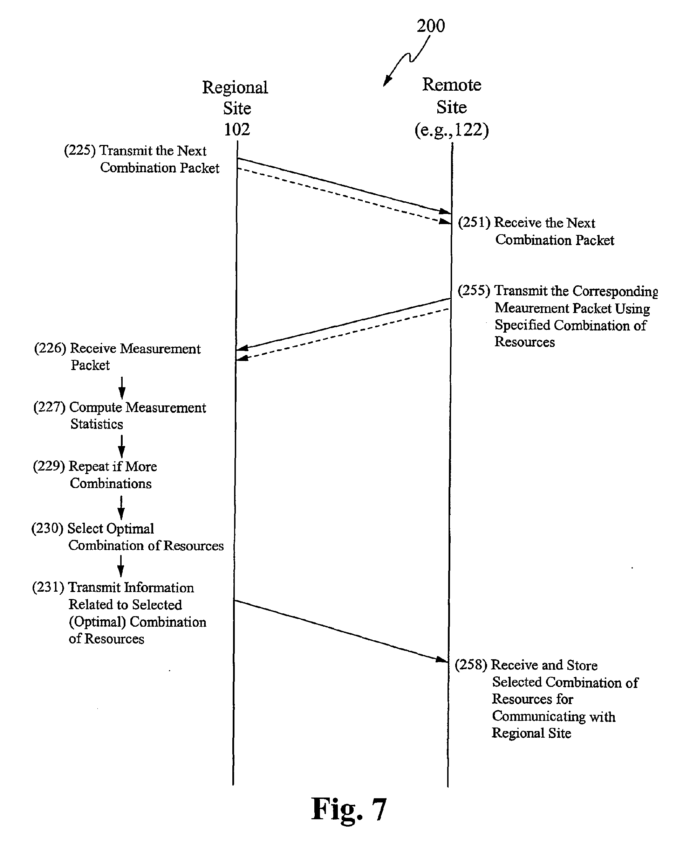

Figures 7-10 are used to illustrate sequences of steps for configuring the remote site 122 of Figure 1, using the regional site 102. In this example, the regional site 102 is also the destination site and, accordingly, is referred to as the regional site during the measurement process and as the destination site 102 for transmitting data packets during general operation. In other words, the regional site 102 not only selects an optimal combination of resources such as described above but also is a destination for receiving data using the selected combination of resources. This configuration is used to simplify the following discussion. In other embodiments, the destination site and the regional site are different.

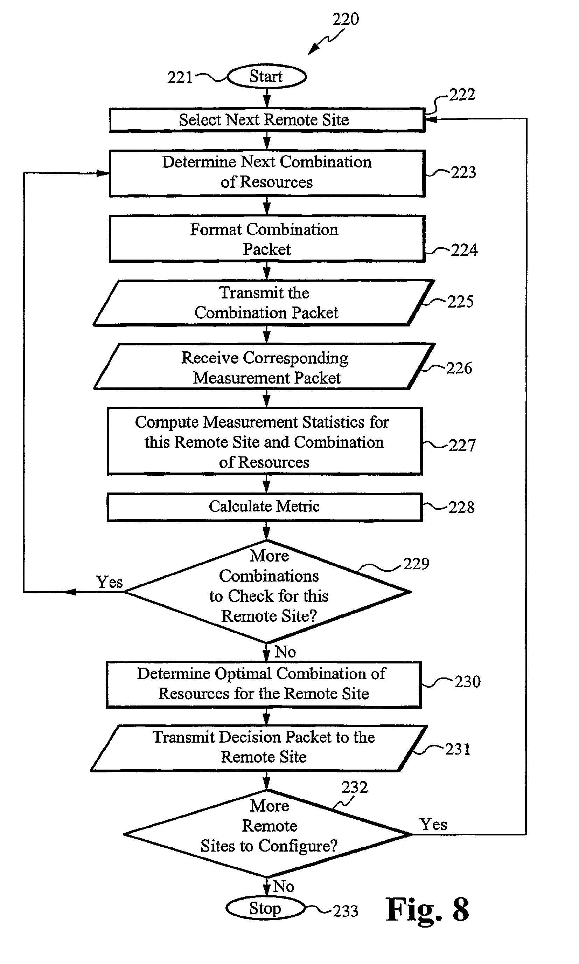

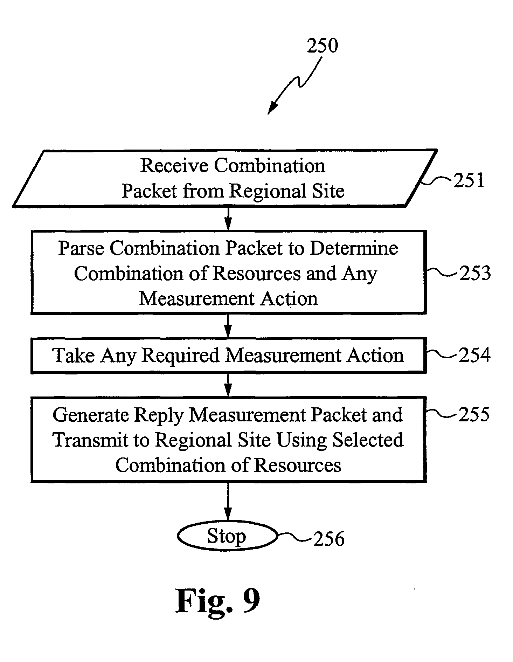

Figure 7 shows high-level steps 200 illustrating the direction of data packets transmitted between the regional site 102 and the remote site 122. The high-level steps 200 show only a portion of the steps taken on the regional site 102 and the remote site 122. Figure 8 shows more detailed steps 220 taken on the regional site 102 during the transmission and reception of data packets illustrated in Figure 7. Figure 9 shows more detailed steps 250 taken on the remote site 122 during the transmission and reception of data packets illustrated in Figure 7.

Referring first to Figures 7 and 8, in the start step 221 (Figure 8) parameters used by the process, such as data variables, are initialized. In this step, for example, a user is able to specify a list of remote sites or even remote hosts at a remote site (e.g., Table 140 in Figure 2). Also in the start step 221, the list of resources is selected. This list can contain the resources available to a company, such as dedicated links, high-capacity links, MPLS routers available to the company, and VPN tunnels. It is from this list that the combinations of resources are determined. Next, in the step 222 (Figure 8), the next remote site in the list (on the first iteration of this process, the next remote site is the first remote site in the list of remote sites) is selected and in the step 223 a first combination of resources is determined. Thus, the process is able to configure multiple remote sites to transmit data packets to the destination site 102, each using different selection criterion and thus metrics. The selection criterion is able to be based, for example, on the type of a host at the destination site, on the applications that run on a remote host, or the particular user. Next, in the step 224, a combination packet containing information specifying this first combination of resources is formatted. In some embodiments, the combination packet also contains a value corresponding to a measurement action, such as described above. In the step 225, the combination packet is transmitted from the regional site 102 to the next remote site. Step 225 is also shown in the Figure 7, used to show the flow of data packets between a remote site and the regional site 102.

Referring now to Figures 7 and 9, in the step 251 the first combination packet is received at the remote site 122. In the step 253 (Figure 9), the first combination packet is parsed to determine the combination of resources and any measurement action to be taken. In the step 254, any measurement action specified is taken. In the step 255, a measurement packet is formatted and transmitted to the regional site 102 using the specified combination of resources. It will be appreciated that a measurement action is able to be taken in the step 254 (e.g., allocating memory at a remote host at the remote site for generating measurement packets), in the step 255 (e.g., changing the size of one or more measurement packets), in other steps, or in none of the steps. The process on the remote site stops in the step 256.

Measurement packets are any one of several types of data packets including, but not limited to, Internet Control Message Protocol (ICMP) packets, user datagram protocol (UDP) packets, and transmission control protocol (TCP) packets. Furthermore, combination packets are the same or a different type of packet as the measurement packets. In one embodiment, combination packets are generated using traceprobe, with the remote site 122 replying using ICMP ERROR messages.

Measurement packets can contain a regional site identification number (corresponding to an identification number sent as part of the combination packet), a remote path identifier (specifying a path that the measurement packet traveled from the remote site to the regional site), a next hop IP address, a measurement packet version number, a measurement type (e.g., ICMP, UDP, or TCP), a sender timestamp, and a sequence number.

Referring now to Figures 7 and 8, in the step 226 the measurement packet is received on the regional site 102. In the step 227, statistics for this measurement packet are calculated and in the step 228 a metric based on these statistics is calculated. As described below, more than one metric is able to be calculated in the step 228, each corresponding to a particular selection criterion. In the step 229, it is determined whether there is another combination of resources for which statistics are to be computed. If there are more combinations of resources, the process loops back to the step 223 (Figure 8), where the process is repeated for the next combination of resources. Otherwise, the process continues to the step 230, where the preferred combination of resources is determined for the particular remote site, based on a comparison of the computed metrics. Once the preferred combination of resources is determined, it is transmitted to the remote site 122 in a decision packet in the step 231. When the remote site 122 receives the decision packet in the step 258, it is configured so that its transmissions to a destination site (here, destination site 102) uses the preferred combination of resources. Next, in the step 232, it is determined whether the process must be performed for other remote sites, such as those remote sites that contain the hosts stored in Table 140 in Figure 2. If there are more remote sites, the process loops back to the step 222; otherwise, the process ends in the step 233.

Decision packets are also able to be transmitted to the remote site 122 using many different methods. As one example, the decision packet is transmitted from a regional site to a remote site using a dedicated channel, where the protocol for transmitting data across the dedicated channel is UDP, TCP, or any other suitable transmission protocol.

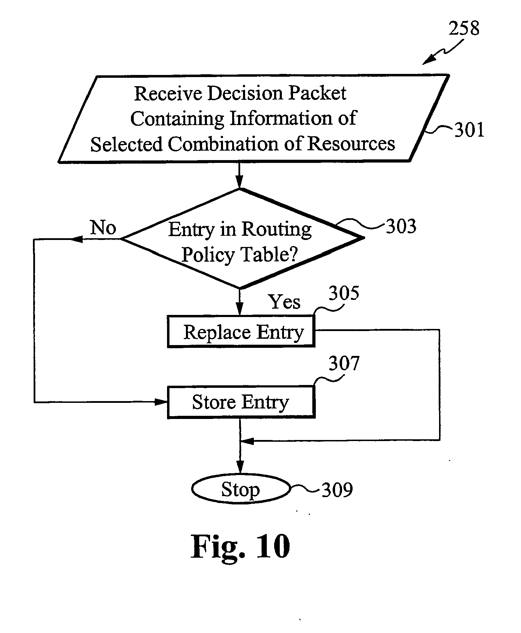

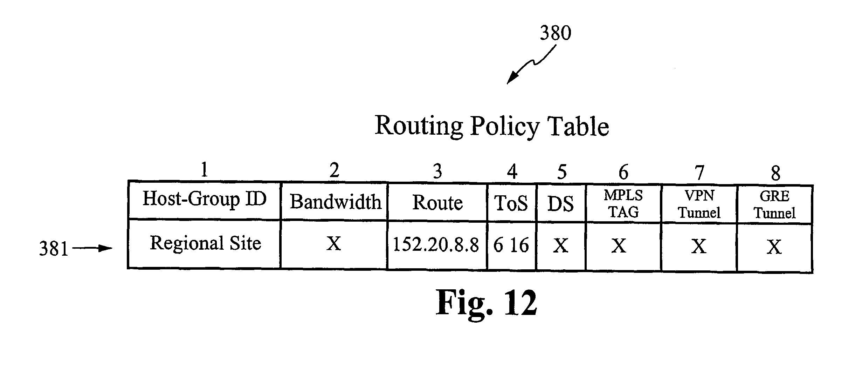

Figure 10 shows a sequence of steps 258 described in Figure 7 in accordance with the present invention. In the step 301, the remote site 122 receives the decision packet containing information specifying the selected (preferred) combination of resources. Next, in the step 303, it is determined whether there is already an entry in a routing policy table, for transmitting data to the destination site (here the destination site 102). As described in more detail below, in relation to Figure 12, the routing policy table is used to format data packets so that they travel from a remote site to a destination site using a selected combination of resources. If there is an entry in the routing policy table, the process continues to the step 305, in which the entry is replaced. The process stops in the step 309. If there is no entry in the routing policy table for the destination site 102, the information specifying the combination is stored in the routing policy table in the step 307 and the process ends in the step 309.

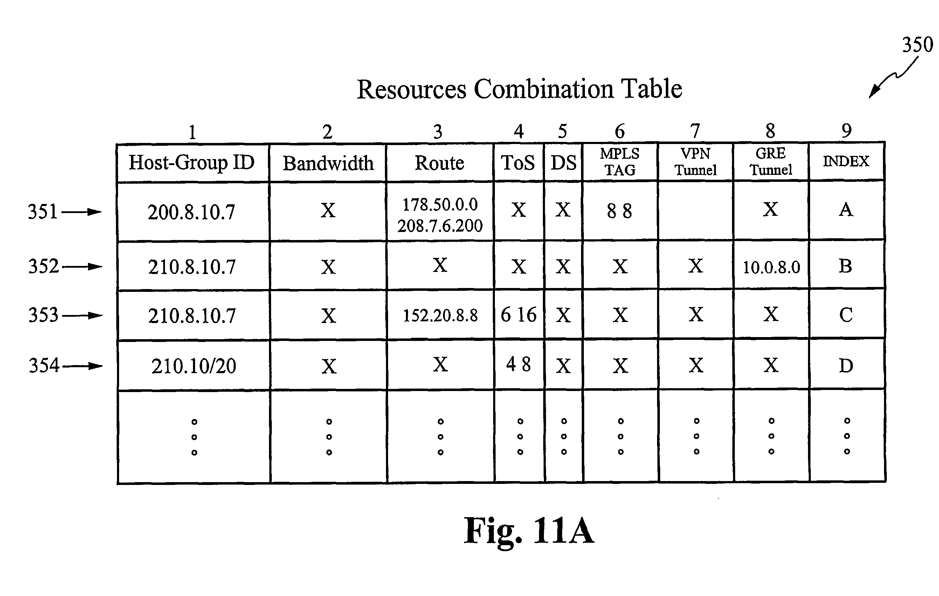

As explained above, in one embodiment the regional site 102 (Figure 1) generates a list of combinations of resources and, preferably, stores the list in a data structure. Figure 11A shows one such data structure, a Resources Combination Table 350, in accordance with one embodiment of the present invention, having exemplary rows 351-354. Each row 351-354 contains entries corresponding to a Host-Group ID (column 1), available resources (columns 2-8), and an index (column 9). The Host-Group ID corresponds to either a single remote host (e.g., entries 351-353, with the remote host having the Internet Protocol (IP) address 200.8.10.7, here remote host 122 in Figure 1) or a group of remote hosts or users addressable by the Group ID (e.g., entry 354 with the remote hosts addressable using the prefix or aggregate IP address 210.10/20, which can correspond to an entire destination site). The row 351 contains an entry for a first combination of resources for transmitting data from the remote site 122 to the regional site 102. The first combination of resources includes a route (column 3), indicating that a measurement packet must travel along the routers with the IP addresses 178.50.0.0 and 208.7.6.200, and an MPLS label 8 8 (column 6). Entries with 'X' indicate don't care values: resources that are not used to transmit packets from a remote site to the destination site 102. While labels are not necessarily considered a resource-a router that uses the labels is labels are referred to as resources to simplify parts of the discussion that follow.

The entry 352 corresponds to a second combination of resources for transmitting data from the remote site 122 to the regional site 102. The second combination of resources includes a Generic Routing Encapsulation (GRE) tunnel (column 8) sent on the interface 10.0.8.0 on a specified host at the remote site 122. And the entry 353 corresponds to a third combination of resources for transmitting data from the remote site 122 to the regional site 102. The second combination of resources includes a router that the data packets must traverse (column 3), having the IP address 152.20.8.8, and a type of service marker (6 16), which is used to mark the data packets so that they are handled accordingly by routers transmitting the data packets from the remote site 122 to the destination site 102. Those skilled in the art will recognize that a data packet is able to be marked so that intermediate routers treat it is as high priority data, in the case of time-sensitive data, or as low priority, or as other priorities.

The Resources Combination Table 350 also shows an entry 354 corresponding to data packets transmitted from a group of hosts (210.10/20) to the destination site 102. An entry for a group of hosts is used when a preferred combination of resources is to be determined for multiple remote sites. A subset of remote sites is thus able to be configured in accordance with the present invention.

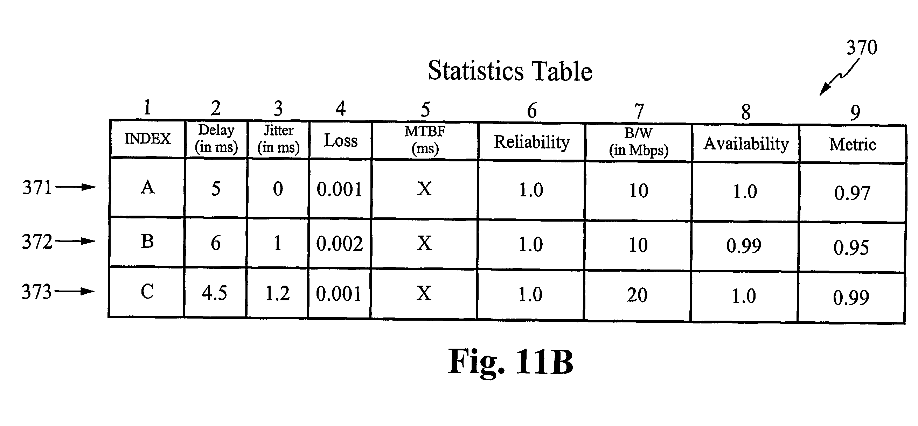

Each of the rows 351-354 also has an entry for an index (column 9), used to link the Resources Combination Table 350 with a corresponding Statistics Table (370, Figure 11B) also stored at the regional site 102. Each row in the Resources Combination Table 350 has a corresponding row in the Statistics Table 370, sharing the same index. The Resources Combination Table 350 and the Statistics Table 370 thus form part of a relational database system, though it will be appreciated that the information contained in them are able to be included in a single table or in some other data structure.

The Statistics Table 370 in Figure 11B contains rows 371-373, each containing entries under the columns labeled 1-9. Referring to the first row 371, the first entry (column 1) indicates that the row corresponds to the entry in Figure 11A having the index A (row 351). Referring to Figures 1, 11A, and 11B, row 371 indicates that for the measurement packet transmitted from the remote site122 to the regional site 102 with the combination of resources indicated in the row 351 (i.e., the path 178.50.0.0 and 208.7.6.200 and tagged with the MPLS label 8 8), the measurement packet had a delay of 5 ms (column 2), 0 ms of jitter (colunm 3), 0.001 percentage of lost packets (column 4), no failures (column 5, where the "X" entry specifies no failures), a reliability score of 1.0 (column 6), an available bandwidth of 10 Mbps (column 7), an availability score of 1.0 (column 8), and a computed metric of 0.97 (column 9). Entries in the columns 2-8 contain statistics for the combination of resources in the corresponding row, and the entry in the corresponding column 9 contains a value for the metric based on the particular selection criterion. The remaining rows 372 and 373 have similarly defined entries.

As shown in Figure 11B, the entries 371-373 are all for transmissions from the remote site 122 to the regional site 102. The entry 371 (for a first combination of resources as shown in the row 351 in Figure 11A) has the metric 0.97; the entry 372 (for a second combination of resources as shown in the row 352 in Figure 11A) has the metric 0.95; and the entry 373 (for a third combination of resources as shown in the row 353 in Figure 11A) has the metric 0.99. Because the metric for the entry with the index C is larger than the metrics for the entries for the indexes A and B, the combination using the third combination of resources is the preferred combination of resources. Information corresponding to this third combination of resources is transmitted to the remote site 122 in a decision packet. The remote site 122 is then configured to transmit data packets to the destination site 102 using the third combination of resources, specified in the row 353 in Figure 11A: using the route containing the router 152.20.8.8 and using the type-of-service marker 6 16.

It will be appreciated that the metrics in the column 9 in the Statistics Table 370 are able to be computed in many ways, depending on the application at hand. For example, for time sensitive applications, the metric is computed as merely a normalized value for the delay subtracted from 1, so that larger values of the metric indicate a smaller delay. Alternatively, the metric is computed as 1 minus a normalized value of the weighted value of jitter and mean time between failure. Indeed, the metric is able to be computed as a function of any of the parameters (statistics) shown in the Statistics Table 370: the delay, the jitter, the loss, the mean time between failures, the reliability, the bandwidth, and the availability. It will be appreciated that other statistics are able to be generated and used in accordance with the present invention, including statistics derived from those listed in the Statistics Table 370, such as variance, standard deviation, and average, to name a few. It will be appreciated that the Statistics Table 370 shows parameters in accordance with one embodiment of the present invention. Other embodiments are able to use many other parameters and combinations of them. Systems for and methods of calculating metrics are taught in U.S. Patent Serial No. 10/070,515, titled "Method and Apparatus for the Assessment and Optimization of Network Traffic," and filed July 25, 2002; U.S. Patent Serial No. 10/070,338, titled "Method and Apparatus for Characterizing the Quality of a Network Path, and published August 28, 2003; and PCT International Application No. PCT/US03/03297, titled "Load Optimization," and published August 14, 2003, all of which are incorporated by reference.

It will also be appreciated that a preferred metric is able to be defined in various ways. While the examples discussed above define the largest metric as the preferred one, in other examples the smallest metric is preferred. For example, if for the application at hand a minimum delay time is preferred, then the metric is a normalized delay time and the selection criterion corresponds to selecting the combination of resources corresponding to the smallest metric.

Multiple metrics are able to be computed and stored for each combination of resources, where each metric is used for a specific selection criterion. Thus, for example, referring to Figure 11B, rather than a single metric for each row stored in column 9, other metrics are able to be stored in additional columns. For example, a first metric corresponding to speed as the selection criterion is stored in a first additional column, a second metric corresponding to mean time between failures is stored in a second additional column, and a third metric corresponding to a weighted average of these is stored in a third additional column.

It will also be appreciated than some parameters, such as jitter, require the transmission of multiple measurement packets from a remote site to a regional site. Furthermore, while Figures 11A and 11B show two tables, it will be appreciated that the information in both Tables 11A and 11B is able to be stored in a single table. Statistics and other information are spread over two tables in Figures 11A and 11B merely to simplify the drawings. It will further be appreciated that many other different types of data structures are able to be used to store information for determining combinations of resources, calculating metrics, and selecting a preferred combination of resources based on a selection criterion.

As explained above, once the preferred combination of resources is determined, the combination is transmitted to the remote site , which is then configured to transmit data packets to the destination site using the selected (preferred) combination of resources. In one embodiment, the remote site stores information corresponding to the preferred combination of resources in a Routing Policy Table 380, shown in Figure 12. The Routing Policy Table 380 contains a row 381. The row 380 contains in column 1 the entry Regional Site an identifier for the regional site102. In accordance with other embodiments, the Routing Policy Table 380 has additional entries in the event that the remote site also transmits data to multiple regional sites in accordance with the present invention. It will also be appreciated that the entry "Regional Site" will normally be replaced with an IP address or other unique identifier for the regional site. Entries in the columns containing an "X" refer to don't care values, indicating that the corresponding resource is not used to route data packets. The row 381 indicates that the data packets transmitted to the regional site must traverse the router with the IP address 152.20.8.8 (column 3) and be formatted to contain the type-of-service marker 6 16 (column 4).

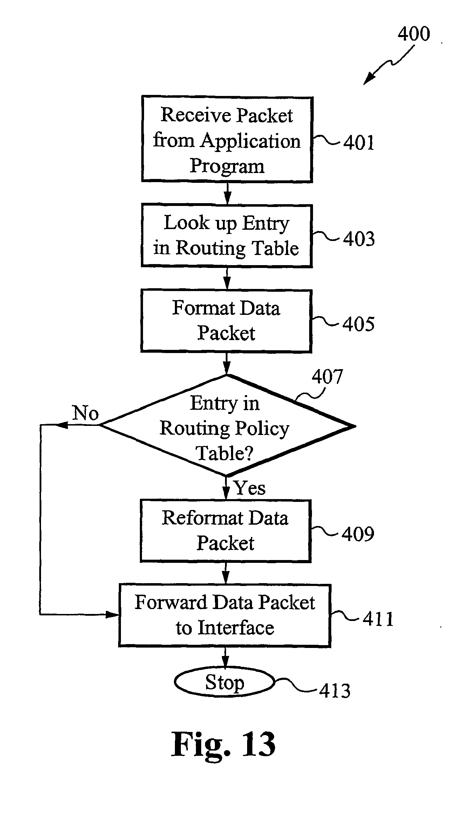

Figure 13 contains a flow chart showing a sequence of steps 400 performed on a remote site using the Routing Policy Table 380 in Figure 12. Referring to Figure 13, in the step 401 the process receives a data packet from an application executing on the remote site, for transmission to a destination site, which in one embodiment is a destination host in accordance with the present invention. Alternatively, the data packet is for a host that does not receive data packets in accordance with the present invention. In the step 403, a routing table on the remote site is parsed to determine whether an entry exists for the address of the destination host computer and in the step 405 the data packet is formatted accordingly. Routing tables are well known to those skilled in the art. In the step 405, a data packet (such as an IP data packet) is formatted based on the entry in the routing table for forwarding the data packet. In the step 407, the process parses the Routing Policy Table 380 (Figure 12), to determine whether the address of the destination host computer matches an entry in column 1 of the Routing Policy Table 380 (Figure 12). If the address of the destination host computer matches an entry in column 1 of the Routing Policy Table 380 (i.e., the transmission is to a destination host in accordance with the present invention), then the formatted data packet is reformatted accordingly in the step 409 and the data packet is forwarded to an interface on the remote site in the step 411. After the step 411, the process stops at the step 413. If, in the step 407, the address of the destination host is not in the Routing Policy Table 380, the process proceeds to the step 411.

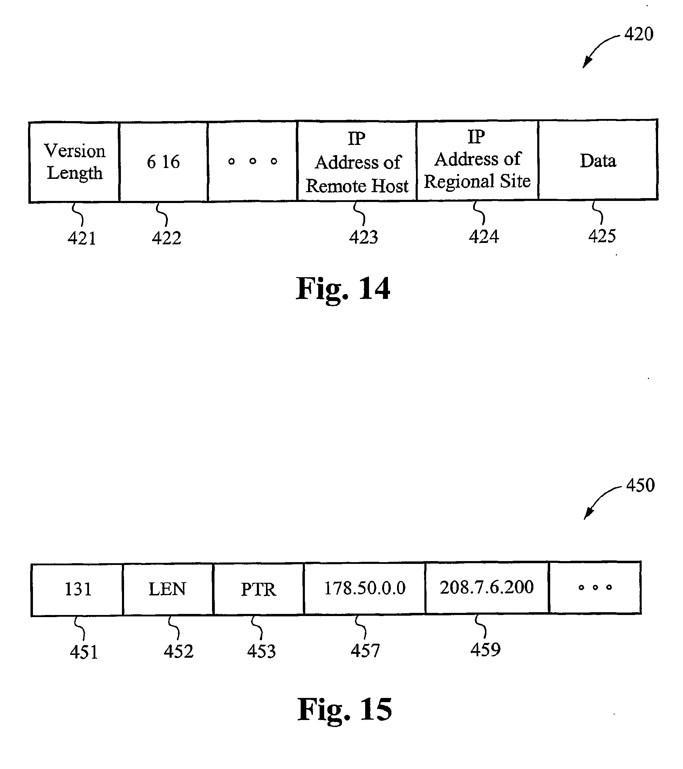

In the step 409 of Figure 13, a data packet is able to be formatted in many ways. As one example, when the selected combination of resources requires that the data packet be immediately forwarded to a specific next-hop address, the data packet is reformatted by rewriting the Layer-2 destination address of the data packet to contain the specific next-hop address. As another example, when the preferred combination of resources requires that a data packet is formatted with a type-of-service marker, the data packet is reformatted so that it resembles the IP data packet 420 in Figure 14. The IP data packet 420 has the type-of-service field 422 formatted to contain the value 6 16. Those skilled in the art will recognize that the IP data packet 420 also contains a version length field 421, a field 423 containing the IP address of the remote host at the remote site, a field 424 containing the IP address of the destination host at a destination site, and a data field 425.

In another embodiment, the preferred combination of resources requires that the data packet transmitted from the remote site to the destination site traverses a router. This embodiment may be used for security, forcing the data packets to traverse only trusted routers. Again referring to Figure 13, in this embodiment in the step 409, the data packets are reformatted so that the IP header contains a code indicating source routing, as described above. A reformatted data packet 450 in accordance the present invention is illustrated in Figure 15. The reformatted data packet 450 contains the value 131 in the code field 451, indicating loose source routing. The reformatted data packet 450 also contains a length field 452, a pointer field 453, a first address field 457 (containing the address 178.50.0.0 of a first router that must be traversed in accordance with source routing), and a second address field 459 (containing the address 208.7.6.200 of a second router that must be traversed). Alternatively, if the preferred combination of resources required the use of strict source routing, the value 137 is used in the code field 451.

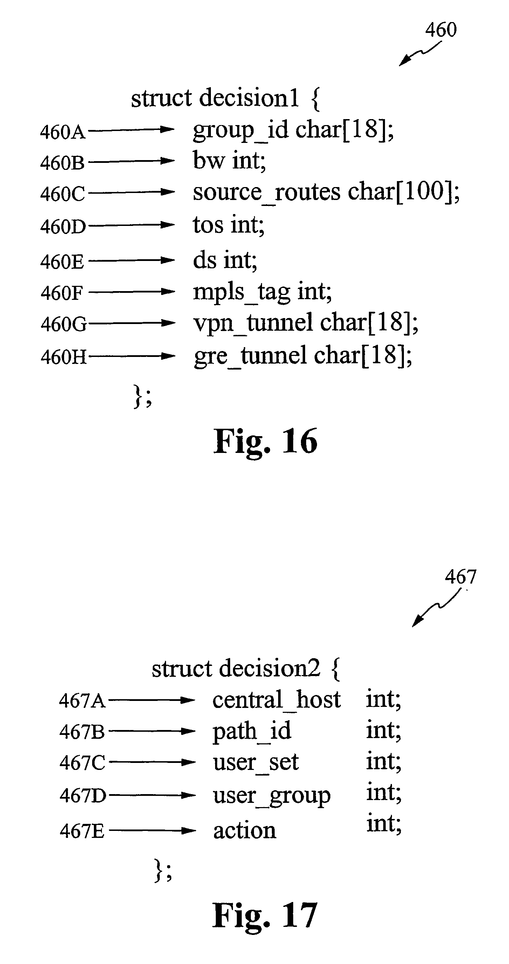

Figure 16 shows a C language data structure 460 that forms part of a decision packet in accordance with one embodiment of the present invention. The data structure 460 contains an element 460A for the host or group identification in dotted decimal notation, an element 460B for the bandwidth of a medium, and element 460C for any routers that must be traversed using source routing, an element 460D for a type-of-service, an element 460E for a differentiated service, an element 460F for a multi-protocol label switching value, an element 460G for a VPN tunnel value, and an element 460H for a GRE tunnel value. It will be appreciated that the data structure 460 is exemplary only. Data structures having more, different, or fewer elements than are shown in Figure 16 are also within the scope of the present invention.

Figure 17, for example, shows a C language data structure 467 that forms part of a decision packet in accordance with another embodiment of the present invention. The data structure 467 contains an element 467A for an identifier for a destination site, an element 467B for an identifier for a path used to transmit data from a remote site to the destination site, an element 467C for a set of users that are bound by the decision action (described below), an element 467D for a group of users that the decision packet is to be transmitted to (e.g., users specified by a prefix, such as in column 1, row 354, of Figure 11A), and an element 467E for a decision action to be taken at the remote site, such as described below.

In still another embodiment, a decision packet comprises an object created using an object oriented programming language. The object contains a data object that identifies the selected combination of resources. The data object is thus able to identify the selected combination of resources without using extra data fields for parameters that are not used, as required in pre-defined data structures.

In one embodiment of the present invention, the remote site contains a Remote Resources table (not shown) storing information similar to columns 2-8 of the Resources Combination Table 350 in Figure 11A. Similar to the Resources Combination Table 350, each row in the Remote Resources table contains entries corresponding to a single combination of resources. The value for the decision action corresponds to the row in the Remote Resources table that contains the preferred combination of resources. When the remote site receives the decision packet, it reads the decision action (which is more compact than including information detailing an entire combination of resources) and is then configured so that it transmits data to the destination site using the combination of resources stored in the corresponding entry in the Remote Resources table.

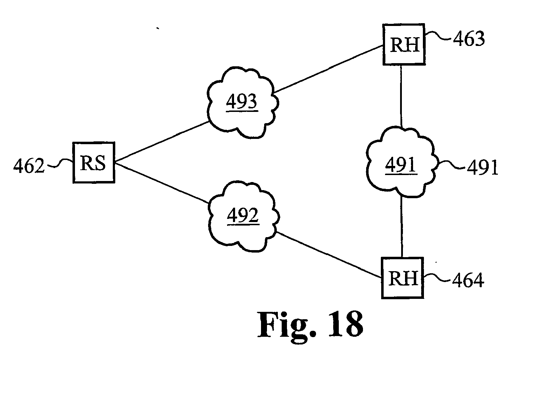

Embodiments of the present invention are not limited to merely computing preferred combinations of resources for transmitting data from remote site to destination sites; other embodiments of the present invention are used to determine a preferred combination of resources for transmitting data packets from one remote sites to another remote site. For example, referring to Figure 18, an environment 461 contains a remote host 464 at a remote site coupled to a remote host 463 at a remote site by a first set of resources shown by the cloud 491 and to a regional site 462 by a second set of resources shown by the cloud 492. The remote host 463 is also coupled to the regional site 462 by a third combination of resources shown by the cloud 493. As one example, the remote host 464 is a lap top, a personal digital assistant, an Internet-enabled telephone, or any other mobile devices, to name a few hosts, and the remote host 463 is a ricochet device, such as a microcell used to transmit data signals from a remote host to a wired access point, and the regional host 463 comprises a wired access point. Ricochet devices are sold, for example, Ricochet Networks, Inc., of Denver, CO. In this example, an optimal combination of resources is selected so that the system is able to select whether to route data from the remote host 464 to (1) the ricochet device 463 using a combination of resources selected from the set of resources 491 and then from the ricochet device 463 to the regional site 462 using a combination of resources selected from the set of resources 493 or (2) directly to the regional site 462 using a combination of resources selected from the set of resources 492. In this example, as in the examples above, a combination of resources is able to be selected based on metrics such as described above, as well as other criteria such as a wireless signal strength between the ricochet device 463 and the regional site 462.

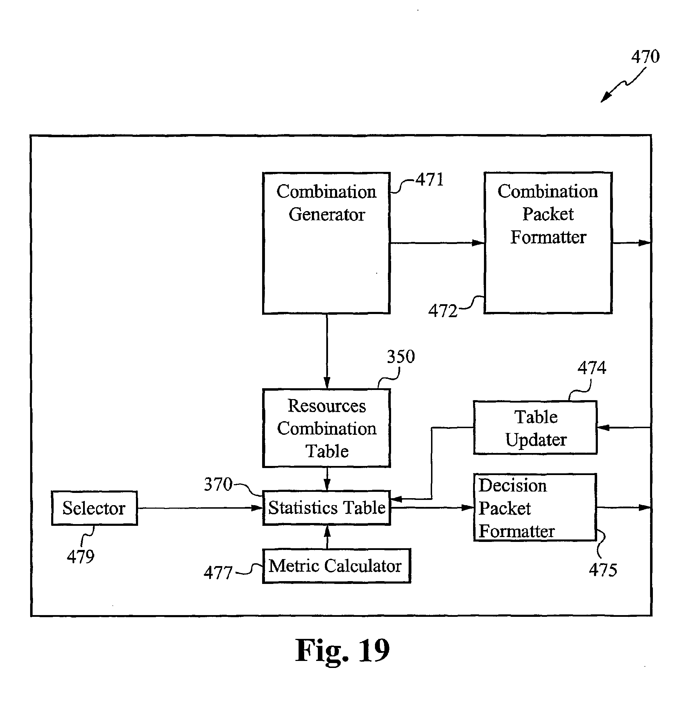

Figure 19 shows components on a central site 470 in accordance with one embodiment of the present invention. Similarly labeled elements in Figures 11A, 11B, and 18 refer to similar elements. The central site 470 comprises a Combination Generator 471 coupled to both a Combination Packet Formatter 472 and the Resources Combination Table 370. The Resources Combination Table 350 is coupled to both a Table Updater 474 and the Statistics Table 370. The Statistics Table 370 is coupled to both a Decision Packet Formatter 475 and a Metric Calculator 477. A Selector 479 is coupled to the Statistics Table 370. Preferably, the elements shown in Figure 19 are stored on a single device, such as a personal computer, though this is not required.

In operation, the Combination Generator 471 generates information corresponding to one or more combinations of resources. The information corresponding to the combinations of resources is coupled to the Combination Packet Formatter 472, which formats and transmits a combination packet for each combination or, alternatively, a combination packet containing information for all of the combinations of resources. The Combination Generator 471 also stores information corresponding to each combination of resources in the Resources Combination Table 350, and generates corresponding entries in the Statistics Table 370. The corresponding measurement packets (from the remote site) are received by the Table Updater 474, which populates the Statistics Table 370 with the statistics, such as listed in the Statistics Table 370 of Figure 11B. The Metrics Calculator 477 then calculates the metric for each measurement packet. The Selector 479 then uses a selection criterion to select the preferred combination of resources and then transmits the preferred combination of resources to the Decision Packet Formatter 475, which formats a decision packet and transmits it to the remote site.

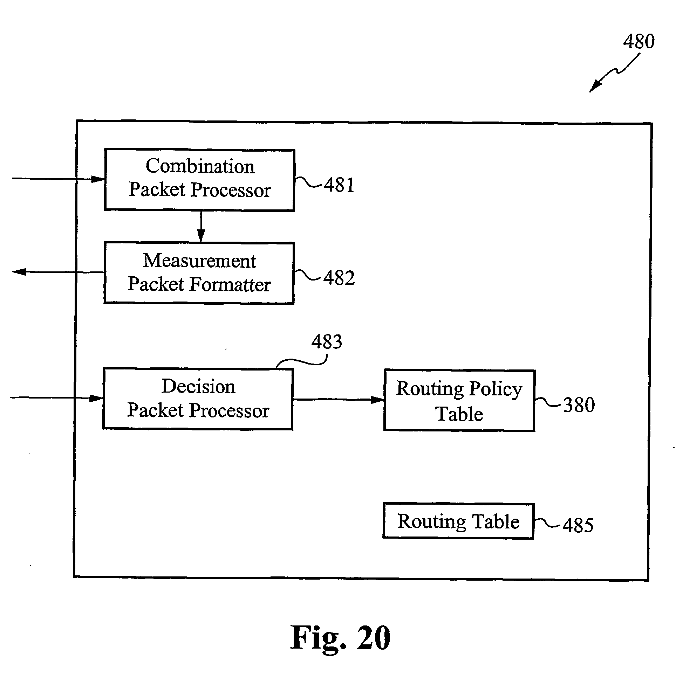

Figure 20 shows the components of a remote site 480 in accordance with one embodiment of the present invention. The remote site 480 comprises (1) a Combination Packet Processor 481 coupled to a Measurement Packet Formatter 482, (2) a Decision Packet Processor coupled to the Routing Policy Table 380 (Figure 12), and (3) a Routing Table 485. In operation, the Combination Packet Processor 481 receives a combination packet from the regional site and parses the resources combination information contained in it. The Measurement Packet Formatter 482 uses the resources combination data to transmit measurement packets to the regional site using the combination of resources. The Decision Packet Processor 483 receives decision packets from the regional site and uses the data corresponding to the preferred combination of resources to populate the Routing Policy Table 380. Preferably, the elements shown in Figure 20 are stored on a single device, such as a personal computer, though this is not required.

It will be appreciated that the components described in Figures 19 and 20 are for illustration only. Other components are able to be used in addition to or as a replacement for these components. In alternative embodiments, one or more of the functions described here are performed by a single component and also by multiple components.

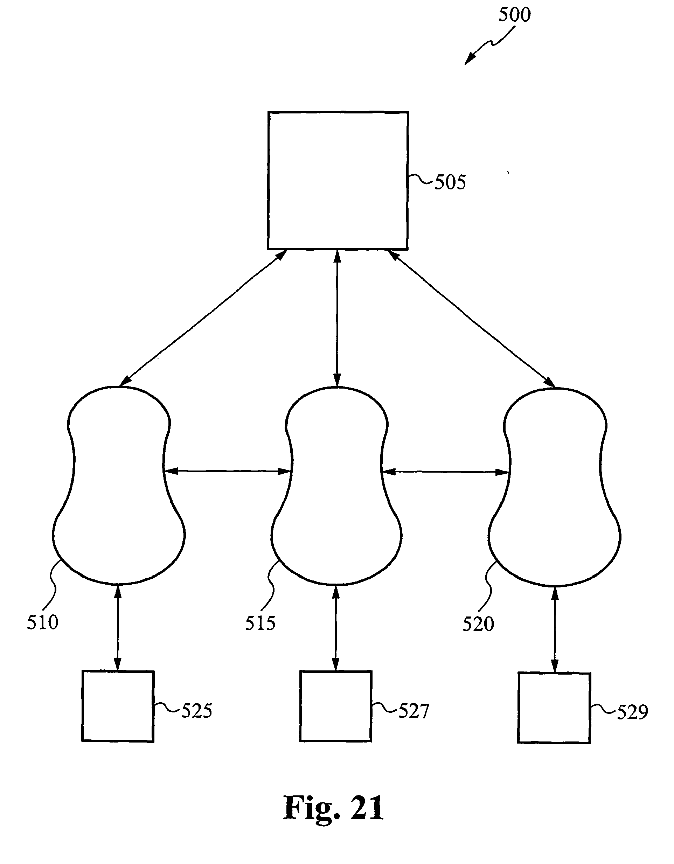

The list of remote hosts (i.e., table 140 in Figure 2) is entered by a user and is thus referred to as a static list. Alternatively, such as illustrated in Figure 21, the list of remote hosts (or remote sites) is determined dynamically, without user intervention.

Figure 21 shows a networked environment 500 for determining preferred combinations of resources in accordance with the present invention. Figure 21 is used to show how a regional site learns the IP addresses of the remote sites or remote hosts at these sites in accordance with one embodiment of the present invention. The environment 500 comprises networked environments 510, 515, and 520. The environments 510, 515, and 520 each comprises one or more ISPs, local area networks, and wide area networks. The environments 510, 515, and 520 are each coupled to a registration server 505. The environment 510 is also coupled to a regional site 525 and to the environment 515, the environment 515 is coupled to the remote host 527 and the environment 520, and the environment 520 is coupled to the remote host 529.

In one embodiment, both of the remote hosts 527 and 529 register with the registration server 505, allowing the registration server 505 to store the IP addresses of the remote hosts 527 and 529. The registration server 505 then transmits these IP addresses to the regional site 525, which will then generate or update a table of remote hosts, such as the Table 140 in Figure 2. In an alternative embodiment, the regional site 525 monitors traffic to the registration server 505 to learn the IP addresses of the remote hosts 527 and 529. In this embodiment, for example, the remote hosts 527 and 529 both use strict source routing to ensure that data transmitted to the registration server 505 must traverse the regional site 525, which is then able to read the IP addresses.

Having remote hosts register with the regional site 525 has advantages. For example, when a remote host registers with the regional site 525, it is able to specify dynamically allocated ports used to communicate with the regional site 525. Knowing the IP address and port number of a remote host allows regional site 525 to recognize and communicate with a remote host behind a network address translation (NAT) router. Accordingly, a regional site in accordance with the present invention is able to determine a preferred combination of resources for a remote host located behind a NAT router to transmit data to the destination site.

In accordance with one embodiment of the present invention, a preferred combination of resources is determined at specified time intervals, to account for periodic changes in the network environment. The specified time intervals are able to be set to fit the application at hand. For example, in critical applications, the preferred combination of resources is determined every minute. For less critical applications, the preferred combination of resources are determined less frequently, such as once an hour or even once a day. In one embodiment, when network failures occur, the combination of resources is set to default values.

The system is able to be configured so that the preferred combination of resources expires after a pre-determined time, such as when communication between a remote host and a regional site is partially or completely interrupted. This ensures that the preferred combination of resources is up-to-date.

Embodiments of the present invention are used on many types of networks including, but not limited to, private networks, public networks, and a combination of both. Regional sites, destination sites, and remote sites are able to be on any combination of private networks and public networks.

Metrics calculated in accordance with the present invention and thus the functions that compute them are able to be selected in any number of ways. For example, some embodiments of the present invention generate an interface, such as a graphical user interface (GUI), that allows users to select how traffic from a remote site to a destination site is to be optimized: The GUI allows the selection criterion (e.g., the metric that is generated and used) to be based on (1) a type of a device (e.g., Internet-enabled telephones are to transmit data using the combination of resources that results in the lowest cost), (2) an identity of a user using the remote host (e.g., the company president must transmit data using only secure transmissions), (3) the type of application running on the remote host at a remote site (e.g., applications transmitting large non-confidential data are to use high-bandwidth links), (4) a normalized weighting of criteria so that several factors (e.g., security and cost) are taken into account, (5) any other criterion to fit the application at hand, or (6) any combination of these. A combination includes weighted combinations, used, for example, when a company wishes to find a preferred logical path that gives 80% weight to speed and 20% weight to cost. A function that takes these weights into account and generates a corresponding metric is accordingly used.

Using a GUI in accordance with the present invention, a user is also able to select interfaces to end points of known VPN or GRE tunnels. When a user specifies that security is to be used as part of a selection criterion, systems and methods in accordance with the present invention thus use these known endpoints when generating combinations of resources.

It will be readily apparent to one skilled in the art that various modifications may be made to the embodiments without departing from the scope of the invention as defined by the appended claims.

## Claims

1. A method of transmitting data from a remote site (122, 155) to a destination site, said method comprising the steps of :
a. generating, at a regional site (102, 151), a first list comprising a first combination of resources for potentially transmitting data from the remote site to the destination site;
b. formatting a first combination packet (147A), the first combination packet comprising the first list;
c. transmitting the first combination packet from the regional site to the remote site;
d. in response to receiving the first combination packet, transmitting from the remote site a first measurement packet (147B), the first measurement packet being transmitted to the regional site via the first combination of resources;
e. generating, at the regional site, a second list comprising a second combination of resources for potentially transmitting data from the remote site to the destination site;
f. formatting a second combination packet (148A), the second combination packet comprising the second list;
g. transmitting the second combination packet from the regional site to the remote site;
h. in response to receiving the second combination packet, transmitting from the remote site a second measurement packet (148B), the second measurement packet being transmitted to the regional site via the second combination of resources;
i. computing first and second measurement statistics for the first and second measurement packets, respectively;
j. comparing the first and second measurement statistics;
k. based on the comparison of the first and second measurement statistics, determining that the first combination of resources is an optimal combination of resources for transmitting data from the remote site to the destination site; and
l. transmitting a decision packet (149) from the regional site to the remote site, the decision packet comprising instructions for the remote site to begin transmitting data to the destination site via the first combination of resources.

2. The method of claim 1, wherein the first combination is determined based on an application being used to transmit data from the remote site to the destination site and wherein selection criteria used to determine that the first combination is the optimal combination includes one or more of ensuring security, minimizing transmission costs, and maximizing transmission speed, and wherein the resources in the first and second list are any one or more of a medium able to accommodate a pre-defined bandwidth, a router, a tunnel, and a network.

3. The method of claim 1, wherein the first and second measurement statistics comprise any one or more of a delay, a jitter, a loss, a mean time between failures, a reliability indicator, a bandwidth estimation, and an availability score.

4. The method of claim 3, wherein the first and second measurement statistics are used to compute metrics used to select the combination of resources.

5. The method of claim 1, wherein any two or more of the remote site, the regional site, and the destination site are coupled by the Internet.

6. A system for routing data comprising:
a. a remote site (122, 155) for transmitting data to a destination site using a selected combination of resources; and
b. a regional site (102, 151) comprising:
i. a generator (471) for generating a first and second list of combinations of resources and information corresponding the selected combination of resources and sending the first and second list of combinations of resources to the remote site via first and second combination packets, respectively, to instruct the remote site to transmit one or more measurement packets back to the regional site across the combination of resources in the first and second lists of combinations of resources prior to the remote site transmitting data to the destination site;
ii. a calculator (477) for calculating a first metric related to a transmission of a first measurement packet across the combination of resources in the first list of combinations of resources from the remote site to the regional site and for calculating a second metric related to a transmission of a second measurement packet across the combination of resources in the second list of combinations of resources from the remote site to the regional site;
iii. a selector (479) for comparing the first and second metrics and for determining the selected combination of resources is an optimal path from the remote site to the destination site based on the comparison of the first and second metrics; and
iv. a decision packet formatter (475) which formats a decision packet for transmission to the remote site, the decision packet containing instructions for the remote site to transmit data to the destination site via the selected combination of resources.

7. The system of claim 6, wherein the regional site further comprises:
iv. a combination table (350) storing information corresponding to the combinations of resources; and
v. a statistics table (370) for storing metrics corresponding to the combinations of resources.

8. The system of claim 6, wherein the selected combination of resources is any one or more of a medium able to accommodate a pre-defined bandwidth, a router, an asynchronous transfer mode network, a private network, a private line, personal computer, a media gateway, a Linux server, an inter-router hop, an application server, and a tunnel.

9. The system of claim 6, wherein the first and second metrics are computed using any one or more of a delay, a jitter, a loss, a mean time between failures, a reliability indicator, a bandwidth estimation, and an availability score.

10. The system of claim 6, wherein the remote site, the regional site, and the destination site are coupled by the Internet.

## Patentansprüche

1. Verfahren zur Übertragung von Daten von einem entfernten Standort (122, 155) zu einem Zielstandort, wobei besagtes Verfahren die folgenden Schritte umfasst:
a. Generieren, an einem regionalen Standort (102, 151), einer ersten Liste, die eine erste Kombination von Ressourcen für potenzielle Übertragung von Daten vom entfernten Standort zum Zielstandort umfasst;
b. Formatieren eines ersten Kombinationspakets (147A), wobei das erste Kombinationspaket die erste Liste umfasst;
c. Übertragen des ersten Kombinationspakets vom regionalen Standort zum entfernten Standort;
d. als Reaktion auf den Empfang des ersten Kombinationspakets, Übertragen eines ersten Messpakets (147B) vom entfernten Standort, wobei das erste Messpaket über die erste Kombination von Ressourcen zum regionalen Standort übertragen wird;
e. Generieren, an einem regionalen Standort, einer zweiten Liste, die eine zweite Kombination von Ressourcen für potenzielle Übertragung von Daten vom entfernten Standort zum Zielstandort umfasst;
f. Formatieren eines zweiten Kombinationspakets (148A), wobei das zweite Kombinationspaket die zweite Liste umfasst;
g. Übertragen des zweiten Kombinationspakets vom regionalen Standort zum entfernten Standort;
h. als Reaktion auf den Empfang des zweiten Kombinationspakets, Übertragen eines zweiten Messpakets (148B) vom entfernten Standort, wobei das zweite Messpaket über die zweite Kombination von Ressourcen zum regionalen Standort übertragen wird;
i. Computing erster und zweiter Messstatistiken für die ersten bzw. zweiten Messpakete;
j. Vergleichen der ersten und zweiten Messstatistiken;
k. beruhend auf dem Vergleich der ersten und zweiten Messstatistiken, Ermitteln, dass die erste Kombination von Ressourcen eine optimale Kombination von Ressourcen zum Übertragen von Daten vom entfernten Standort zum Zielstandort ist; und
l. Übertragen eines Entscheidungspakets (149) vom regionalen Standort zum entfernten Standort, wobei das Entscheidungspaket Befehle für den entfernten Standort umfasst, über die erste Kombination von Ressourcen mit der Übertragung von Daten zum Zielstandort zu beginnen.

2. Verfahren nach Anspruch 1, wobei die erste Kombination auf einer Anwendung beruhend ermittelt wird, die benutzt wird, Daten vom entfernten Standort zum Zielstandort zu übertragen und, wobei Auswahlkriterien, die zum Ermitteln benutzt werden, dass die erste Kombination die optimale Kombination ist, eins oder mehr von Folgendem, d. h. Gewährleisten von Sicherheit, Minimieren von Übertragungskosten und Maximieren von Übertragungsgeschwindigkeit einschließen und, wobei die Ressourcen in der ersten und zweiten Liste irgendeine oder mehrere eines Mediums sind, das fähig ist, einer vordefinierte Bandbreite, einem Router, einem Tunnel und einem Netzwerk Rechnung zu tragen.

3. Verfahren nach Anspruch 1, wobei die ersten und zweiten Messstatistiken irgendeins oder mehr von Folgendem, d. h. einer Verzögerung, einem Jitter, einem Verlust, einer mittleren Zeit zwischen Ausfällen, einem Verlässlichkeitsanzeiger, einer Bandbreitenschätzung und eine Verfügbarkeitspunktzahl umfassen.

4. Verfahren nach Anspruch 3, wobei die ersten und zweiten Messstatistiken benutzt werden, Metriken zu errechnen, die zur Auswahl der Kombination von Ressourcen benutzt werden.

5. Verfahren nach Anspruch 1, wobei beliebige zwei oder mehrere des entfernten Standorts, des regionalen Standorts und des Zielstandorts durch das Internet gekoppelt sind.

6. System zum Routing von Daten, umfassend:
a. einen entfernten Standort (122, 155) zum Übertragen von Daten an einen Zielstandort unter Einsatz einer ausgewählten Kombination von Ressourcen; und
b. einen regionalen Standort (102, 151), umfassend:
i. einen Generator (471) zum Generieren einer ersten und zweiten Kombinationsliste von Ressourcen und Information, die der ausgewählten Kombination von Ressourcen entspricht und Senden der ersten und zweiten Kombinationsliste von Ressourcen über erste bzw. zweite Kombinationspakete zum entfernten Standort, um den entfernten Standort zu instruieren, ein oder mehrere Messpakete zurück an den regionalen Standort über die Kombination von Ressourcen in den ersten und zweiten Kombinationslisten von Ressourcen zu senden, bevor der entfernte Standort Daten an den Zielort überträgt;
ii. einen Rechner (477) zum Berechnen einer ersten Metrik im Zusammenhang mit einer Übertragung eines ersten Messpakets über die Kombination von Ressourcen in der ersten Liste von Kombinationen von Ressourcen vom entfernten Standort zum regionalen Standort und zum Berechnen einer zweiten Metrik im Zusammenhang mit einer Übertragung eines zweiten Messpakets über die Kombination von Ressourcen in der zweiten Liste von Kombinationen von Ressourcen vom entfernten Standort zum regionalen Standort;
iii. einen Selektor (479) zum Vergleichen der ersten und zweiten Metriken und zum Ermitteln, dass die ausgewählte Kombination von Ressourcen ein optimaler Weg vom entfernten Standort zum Zielstandort beruhend auf dem Vergleich der ersten und zweiten Metriken ist; und
iv. einen Formatierer (475) für Entscheidungspakete, der ein Entscheidungspaket zum Übertragen an den entfernten Standort formatiert, wobei das Entscheidungspaket Befehle für den entfernten Standort enthält, Daten über die ausgewählte Kombination von Ressourcen an den Zielstandort zu übertragen.

7. System nach Anspruch 6, wobei der regionale Standort weiter umfasst:
iv. eine Kombinationstabelle (350), die den Kombinationen von Ressourcen entsprechende Information speichert; und
v. eine Statistiktabelle (370) zum Speichern von Metriken, die den Kombinationen von Ressourcen entsprechen.

8. System nach Anspruch 6, wobei die ausgewählte Kombination von Ressourcen eine beliebige oder mehrere eines Mediums ist, das fähig ist, einer vordefinierten Bandbreite, einem Router, einem Netzwerk mit asynchronem Transfermodus, einem privaten Netzwerk, einer privaten Leitung, einem persönlichen Computer, einem Media Gateway, einem Linux-Server, einem Inter-Router-Hop, einem Anwendungs-Server und einem Tunnel Rechnung zu tragen.

9. Verfahren nach Anspruch 6, wobei die ersten und zweiten Metriken unter Einsatz eines beliebigen oder mehreren der Folgenden berechnet werden, d. h. einer Verzögerung, einem Jitter, einem Verlust, einer mittleren Zeit zwischen Ausfällen, einem Verlässlichkeitsanzeiger, einer Bandbreitenschätzung und eine Verfügbarkeitspunktzahl.

10. Verfahren nach Anspruch 6, wobei der entfernte Standort, der regionale Standort und der Zielstandort durch das Internet gekoppelt sind.

## Revendications

1. Procédé de transmission de données depuis un site distant (122, 155) vers un site destinataire, ledit procédé comprenant les étapes de :
a. génération, dans un site régional (102, 151), d'une première liste comprenant une première combinaison de ressources pour potentiellement transmettre des données depuis le site distant vers le site destinataire ;
b. formatage d'un premier paquet de combinaison (147A), le premier paquet de combinaison comprenant la première liste ;
c. transmission du premier paquet de combinaison depuis le site régional vers le site distant ;
d. en réponse à la réception du premier paquet de combinaison, transmission depuis le site distant d'un premier paquet de mesure (147B), le premier paquet de mesure étant transmis vers le site régional par l'intermédiaire de la première combinaison de ressources ;
e. génération, dans le site régional, d'une seconde liste comprenant une seconde combinaison de ressources pour potentiellement transmettre des données depuis le site distant vers le site destinataire ;
f. formatage d'un second paquet de combinaison (148A), le second paquet de combinaison comprenant la seconde liste ;
g. transmission du second paquet de combinaison depuis le site régional vers le site distant ;
h. en réponse à la réception du second paquet de combinaison, transmission depuis le site distant d'un second paquet de mesure (148B), le second paquet de mesure étant transmis vers le site régional par l'intermédiaire de la seconde combinaison de ressources ;
i. calcul de première et seconde statistiques de mesure pour les premier et second paquets de mesure respectivement ;
j. comparaison des première et seconde statistiques de mesure ;
k. en fonction de la comparaison des première et seconde statistiques de mesure, détermination que la première combinaison de ressources est une combinaison de ressources optimale pour transmettre des données depuis le site distant vers le site destinataire ; et
l. transmission d'un paquet de décision (149) depuis le site régional vers le site distant, le paquet de décision comprenant des instructions instruisant le site distant de commencer à transmettre des données vers le site destinataire par l'intermédiaire de la première combinaison de ressources.

2. Procédé selon la revendication 1, dans lequel la première combinaison est déterminée en fonction d'une application utilisée pour transmettre des données depuis le site distant vers le site destinataire et dans lequel des critères de sélection utilisés pour déterminer que la première combinaison est la combinaison optimale comportent un ou plusieurs des critères de garantie de sécurité, de minimisation des coûts de transmission, et de maximisation de la vitesse de transmission, et dans lequel les ressources dans les première et seconde listes sont n'importe lequel ou lesquels d'un support capable d'accepter une largeur de bande prédéfinie, d'un routeur, d'un tunnel et d'un réseau.

3. Procédé selon la revendication 1, dans lequel les première et seconde statistiques de mesure comprennent n'importe lequel ou lesquels d'un retard, d'une gigue, d'une perte, d'un temps moyen entre pannes, d'un indicateur de fiabilité, d'une estimation de largeur de bande, et d'un score de disponibilité.

4. Procédé selon la revendication 3, dans lequel les première et seconde statistiques de mesure servent à calculer des métriques utilisées pour sélectionner la combinaison de ressources.

5. Procédé selon la revendication 1, dans lequel n'importe lesquels deux ou plusieurs du site distant, du site régional et du site destinataire sont couplés par l'Internet.

6. Système de routage de données comprenant :
a. un site distant (122, 155) pour transmettre des données à un site destinataire en utilisant une combinaison de ressources sélectionnée ; et
b. un site régional (102, 151) comprenant :
i. un générateur (471) pour générer une première et une seconde liste de combinaisons de ressources et des informations correspondant à la combinaison de ressources sélectionnée et envoyer les première et seconde listes de combinaisons de ressources au site distant par l'intermédiaire de premier et second paquets de combinaison, respectivement, afin d'instruire le site distant de transmettre un ou plusieurs paquets de mesure de retour vers le site régional sur la combinaison de ressources dans les première et seconde listes de combinaisons de ressources avant la transmission de données par le site distant au site destinataire ;
ii. un calculateur (477) pour calculer une première métrique liée à une transmission d'un premier paquet de mesure sur la combinaison de ressources dans la première liste de combinaisons des ressources depuis le site distant vers le site régional et pour calculer une seconde métrique liée à une transmission d'un second paquet de mesure sur la combinaison de ressources dans la seconde liste de combinaisons des ressources depuis le site distant vers le site régional ;
iii. un sélecteur (479) pour comparer les première et seconde métriques et pour déterminer que la combinaison de ressources sélectionnée est un chemin optimal depuis le site distant vers le site destinataire en fonction de la comparaison des première et seconde métriques ; et
iv. un formateur de paquet de décision (475) qui formate un paquet de décision en vue de sa transmission au site distant, le paquet de décision contenant des instructions instruisant le site distant de transmettre des données au site destinataire par l'intermédiaire de la combinaison de ressources sélectionnée.

7. Système selon la revendication 6, dans lequel le site régional comprend :
iv. une table de combinaisons (350) mémorisant des informations correspondant aux combinaisons de ressources ; et
v. une table de statistiques (370) pour mémoriser des métriques correspondant aux combinaisons de ressources.

8. Système selon la revendication 6, dans lequel la combinaison de ressources sélectionnée est n'importe lequel ou lesquels d'un support capable d'accepter une largeur de bande prédéfinie, d'un routeur, d'un réseau à mode de transfert asynchrone, d'un réseau privé, d'une ligne privée, d'un ordinateur individuel, d'une passerelle multimédia, d'un serveur Linux, d'un noeud entre routeurs, d'un serveur d'applications, et d'un tunnel.

9. Système selon la revendication 6, dans lequel les première et seconde métriques sont calculées en utilisant n'importe lequel ou lesquels d'un retard, d'une gigue, d'une perte, d'un temps moyen entre pannes, d'un indicateur de fiabilité, d'une estimation de largeur de bande, et d'un score de disponibilité.

10. Système selon la revendication 6, dans lequel le site distant, le site régional, et le site destinataire sont couplés par l'Internet.
